# EUROPEAN PATENT APPLICATION

(11) **EP 4 848 551 A1**
(43) Date of publication of application: **02.12.2026**
(21) Application number: 25179309.7
(22) Date of filing: 28.05.2025
(51) Int. Cl.: H02M 1/00, H02M 1/38, H02M 3/00, H02M 3/335

(54) **ISOLATED LLC ASYMMETRIC HALF-BRIDGE CONVERTER WITH ADAPTIVE DEAD-TIME CONTROL BY MEANS OF VALLEY OR PEAK SWITCHING**

(71) Applicant: Tridonic GmbH & Co KG, 6851 Dornbirn (AT)
(72) Inventor: Schneider, Miguel Philipp, 6851 Dornbirn (AT); Lochmann, Frank, 6851 Dornbirn (AT)
(74) Representative: Rupp, Christian

(57) **Abstract**

The present invention provides an electrical power converter. Said power converter comprises a primary-side switching circuit including a high-side switch and a low-side switch connected in series between a supply voltage and ground. The power converter further comprises a resonant tank circuit and a transformer having a primary winding coupled to the resonant tank circuit and one or more secondary windings. The resonant tank circuit is coupled to a midpoint node between the high-side and low-side switches, and the transformer. Said power converter further comprises a control circuitry configured to alternately control the high-side and low-side switches with an adjustable deadtime between switching transitions, determine a trigger condition based on an oscillation behavior of the voltage at the midpoint node, and initiate switching of the high-side switch or the low-side switch in response to that trigger condition.

## Description

### TECHNICAL FIELD

The present invention relates to power electronics, particularly to intermediate bus converters (IBCs) used in switched-mode power supplies. The invention is applicable to high-current, low-voltage applications, such as power delivery for graphics processing units (GPUs) in data centers, as well as other demanding environments including LED lighting systems, industrial automation, and telecommunications infrastructure.

### BACKGROUND

Intermediate Bus Converters (IBCs) are widely used in switched-mode power supplies (SMPS) to efficiently deliver low output voltages at high currents. These converters play a vital role in power delivery networks for data centers, high-density servers, artificial intelligence accelerators, and advanced lighting systems including luminaires, ballasts, and LED drivers.

To reduce power losses and improve conversion efficiency, soft-switching techniques such as resonant LLC topologies are widely adopted. These topologies rely on zero-voltage switching (ZVS) to minimize switching losses and electromagnetic interference (EMI), especially under high current conditions. However, maintaining ZVS over a wide load range-particularly at high output currents-remains a technical challenge.

Additionally, prolonged dead times between switching events can lead to uncontrolled oscillations at the midpoint node between the converter's switching elements. These oscillations can interfere with the desired switching behavior, increase switching losses, and reduce system efficiency. Moreover, traditional designs often require large output capacitors to suppress voltage ripple, leading to increased system size, cost, and complexity.

There is a continuing need for improved converter designs that address these challenges while maintaining high efficiency, scalability, and reliability in demanding high-current applications.

### SUMMARY

In view of the above-discussed challenges, the invention aims to improve the performance of LLC-based power converters by optimally timing the activation of the switches based on oscillations at the midpoint node. By leveraging the natural resonant characteristics of the circuit, the invention enables near-zero-voltage switching, reduces switching losses, and improves efficiency during extended deadtime operation. The invention is particularly suited to high-current applications, such as data center, industrial, and lighting systems, where a broad load range and high conversion efficiency are critical.

These and other objectives are achieved by the solution of this disclosure as described in the independent claims. Advantageous implementations are further defined in the dependent claims.

According to a first aspect of the invention, an electrical power converter is provided. Said electrical power converter comprises a primary-side switching circuit including a high-side switch and a low-side switch connected in series between a supply voltage and ground, wherein a midpoint node is defined at the connection between the high-side and low-side switches. The electrical power converter further comprises a resonant tank circuit and a transformer. The resonant tank circuit is coupled to the midpoint node and the transformer. The transformer has a primary winding coupled to the resonant tank circuit and one or more secondary windings.

Said electrical power converter further comprises a control circuitry configured to alternately switch the high-side and low-side switches with an adjustable deadtime between switching transitions. The control circuitry is further configured to determine a trigger condition based on an oscillation behavior of the voltage at the midpoint node, and to initiate switching of either the high-side switch or the low-side switch in response to that trigger condition.

The invention provides an electrical power converter, particularly of the LLC type, in which the control strategy allows the converter to operate dynamically based on actual voltage behavior rather than fixed timing. This enables adaptive switch control that reacts to circuit dynamics, improving soft-switching conditions and reducing losses, particularly under varying load conditions where traditional fixed-timing approaches are less efficient.

According to an implementation form of the first aspect of the invention, the trigger condition corresponds to a peak or a valley of an oscillating voltage at the midpoint node.

Notably, the switching event is tied to identifiable peaks or valleys in the oscillating midpoint voltage. By initiating switching at these waveform extremums, the system aligns switching transitions with moments of minimal voltage stress, enabling soft-switching or near-zero-voltage conditions. This reduces switching losses and electromagnetic emissions, improving overall converter performance and reliability.

According to a further implementation form of the first aspect of the invention, the control circuitry is further configured to determine a peak or a valley of the oscillating voltage by: monitoring the voltage at the midpoint node, and/or pre-calculating the voltage based on one or more component parameters of the primary-side switching circuit.

In this configuration, alternative methods can be used to identify switching points: real-time monitoring and model-based prediction. Monitoring allows dynamic adjustment based on actual circuit conditions, while pre-calculation provides a fast and resource-efficient method for estimating peak or valley timing based on known resonant behavior. This dual-mode approach ensures reliable operation across a wide range of operating conditions and circuit tolerances.

According to a further implementation form of the first aspect of the invention, the control circuitry further comprises a comparator circuit configured to detect when the voltage at the midpoint node crosses a predefined threshold, to determine a peak or a valley of the oscillating voltage.

This configuration introduces a simple and efficient hardware-based mechanism for detecting peaks or valleys in the oscillating midpoint voltage using a comparator. By comparing the voltage to a set threshold, the control system can precisely identify optimal switching moments without relying on complex signal processing. This enables fast and low-cost implementations of the inventive control strategy, suitable for space- or resource-constrained applications.

According to a further implementation form of the first aspect of the invention, the control circuitry is further configured to initiate switching of the high-side switch or the low-side switch within a predefined timing window corresponding to a determined peak or valley of the oscillating voltage.

This allows the system to tolerate timing variations caused by noise, signal delay, or comparator thresholds while still ensuring the switching event occurs close to an optimal voltage point. This approach provides robustness against timing inaccuracies, noise, or signal processing delays, which are common in practical implementations. By allowing switching to occur within a bounded time range rather than requiring exact alignment with the voltage extremum, the converter can still maintain soft-switching conditions and achieve low switching losses with more forgiving timing control.

According to a further implementation form of the first aspect of the invention, the control circuitry is further configured to switch on the high-side switch when the monitored or pre-calculated voltage at the midpoint node reaches a predefined peak value; or switch on the low-side switch when the monitored or pre-calculated voltage at the midpoint node reaches a predefined valley value.

This configuration defines a directional switching strategy in which the high-side switch is activated at a peak and the low-side switch at a valley of the oscillating midpoint voltage. By aligning the switch-on event with the natural voltage extremum in the direction of conduction, each transition occurs at a moment when the switch sees minimal voltage stress. This reduces switching losses and electromagnetic interference, and enables more efficient energy transfer through the resonant tank by preserving the integrity of the oscillating waveform across the full half-bridge switching cycle.

According to a further implementation form of the first aspect of the invention, the control circuitry is configured to initiate switching of the high-side switch or the low-side switch at a peak or a valley of the oscillating voltage at the midpoint node that occurs after the midpoint voltage has collapsed from a previous switching transition.

In this configuration, a delayed switching mechanism that leverages the natural resonance of the converter after the midpoint voltage collapses during extended deadtime, is proposed. By intentionally waiting for a subsequent peak or valley before switching, the control circuitry recovers soft-switching conditions even when traditional ZVS timing has passed. This is particularly advantageous in low-load or standby operation, where long deadtimes are desirable to reduce per-cycle power delivery.

According to a further implementation form of the first aspect of the invention, the adjustable deadtime is configured to exceed a duration corresponding to ZVS.

The present invention allows the converter to operate with deadtimes longer than those used in conventional ZVS control schemes. This enables lower output power operation and supports efficient light-load behavior without requiring a change in topology. When combined with oscillation-based switching detection, the converter can maintain low switching losses even outside the traditional ZVS window, improving energy efficiency across a wide operating range.

According to a further implementation form of the first aspect of the invention, the transformer is a matrix transformer comprising a plurality of secondary windings connected in parallel, each configured to deliver a portion of a total output current.

This configuration distributes the high output current across several paths, reducing the current stress on individual components. The technical effect is a substantial improvement in thermal performance and current handling capability. It also facilitates a modular and scalable design, which is highly advantageous in data center power supplies where efficient delivery of very high currents is critical.

According to a further implementation form of the first aspect of the invention, the electrical power converter further comprises one or more secondary-side rectification circuits, each being connected to a respective secondary winding and outputting an output voltage.

The power converter includes multiple rectification circuits on the secondary side, each associated with a respective secondary winding. The output currents are thus distributed and rectified separately. This arrangement complements the matrix transformer configuration and ensures that each path efficiently converts the AC signal to DC with reduced conduction losses. This allows an improved conversion efficiency, enhanced thermal distribution, and increased output current capacity, which are essential for powering high-performance GPUs and similar loads.

According to a further implementation form of the first aspect of the invention, transformer is configured such that a winding ratio between the primary and each secondary winding is substantially equal.

The transformer is designed such that the winding ratio between the primary and each secondary winding is close to one-to-one. This design choice minimizes voltage transformation and associated core losses, which are typically more pronounced at higher step-down ratios. The technical effect is an increase in power transfer efficiency and a reduction in magnetic saturation risk. This also supports the high-current, low-voltage output requirements typical in modern high-performance computing applications.

According to a second aspect of the invention, a method for operating an electrical power converter is provided. The power converter comprises a high-side switch, a low-side switch, a resonant circuit, and a transformer. The electrical power converter may be the electrical power converter according to the first aspect or any implementation form of the first aspect.

The method comprises alternately switching the high-side and low-side switches with an adjustable deadtime between switching transitions; determining a trigger condition based on an oscillation behavior of a voltage at the midpoint node; and initiating switching of the high-side switch or the low-side switch in response to the trigger condition.

This allows switching to occur under near-zero-voltage conditions, even when the resonant behavior leads to a delayed recovery of the midpoint voltage. The technical effect of this method is to optimize switching timing by leveraging the natural resonant oscillation of the converter's midpoint node, ensuring minimal switching loss while extending the usable deadtime window for low-power operation. This improves overall efficiency and expands the operational range of soft-switching in resonant converters.

Implementation forms of the method of the second aspect may correspond to the implementation forms of the electrical power converter of the first aspect described above. The method of the second aspect and its implementation forms achieve the same advantages and effects as described above for the electrical power converter of the first aspect and its implementation forms.

According to a third aspect of the invention, a power delivery system is provided. The power delivery system comprises a load device configured to operate at a low DC voltage and high current; and an electrical power converter according to the first aspect or any implementation forms of the first aspect of the invention, wherein the electrical power converter is configured to supply power to the load device.

Optionally, the load device comprises a GPU, a lighting module, or an array of LEDs.

Implementation forms of the system of the third aspect may correspond to the implementation forms of the electrical power converter of the first aspect described above. The system of the third aspect and its implementation forms achieve the same advantages and effects as described above for the electrical power converter of the first aspect and its implementation forms.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Fig. 1: shows an exemplary electrical power converter according to an embodiment of this invention.
- Fig. 2: shows a timing diagram related to the operation of the electrical power converter according to an embodiment of this invention.
- Fig. 3: shows a method according to an embodiment of this invention.

### DETAILED DESCRIPTION OF EMBODIMENTS

Illustrative embodiments of an electrical power converter, a power delivery system, and a method for operating the electrical power converter are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

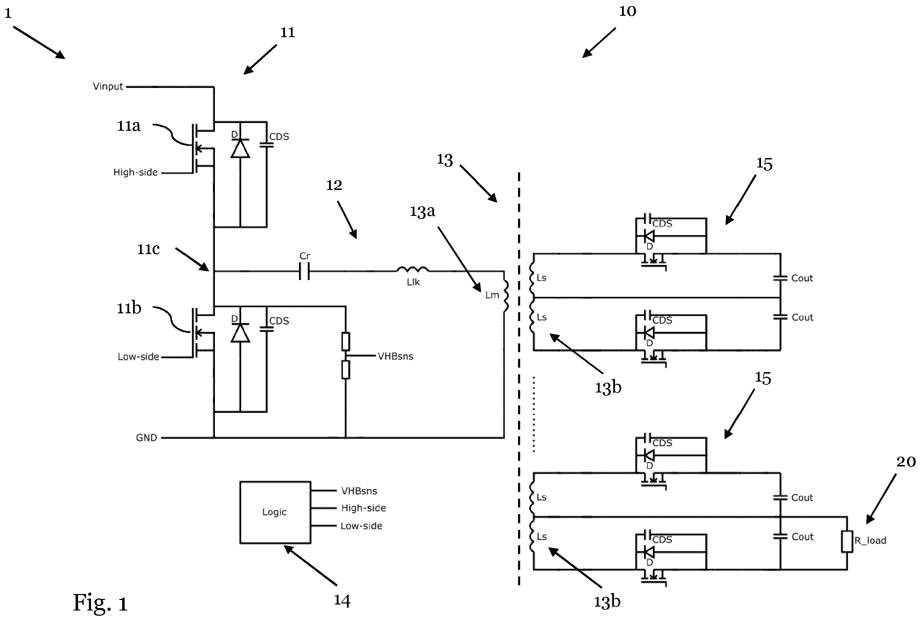

With respect to Fig. 1, an exemplary embodiment of an electrical power converter 10 is illustrated. The electrical power converter 10 comprises a primary-side switching circuit 11, a resonant tank circuit 12, a transformer 13, and a control circuitry 14.

The primary-side switching circuit 11 includes a high-side switch 11a and a low-side switch 11b connected in series between a supply voltage (Vinput) and ground. The connection point between the high-side switch 11a and the low-side switch 11b defines a midpoint node 11c. This midpoint node 11c serves as the input to the resonant tank circuit 12.

The resonant tank circuit 12 is connected between the midpoint node 11c and the primary winding 13a of a transformer 13. The resonant tank circuit 12 may include one or more inductive and capacitive components arranged to establish resonant conditions during operation, for instance, a resonant capacitor Cr, a resonant inductor Llk and a magnetization inductor Lm.

The transformer 13 includes a primary winding 13a coupled to the output of the resonant tank circuit 12, and one or more secondary windings 13b on the secondary side. Possibly, the inductor Lm can be formed by or connected to the primary winding 13a of the transformer 13.

A control circuit 14 is provided to manage the operation of switches. While not shown in detail in Fig. 1, the control circuitry 14 is operably connected to the high-side switch 11a and low-side switch 11b to provide appropriate gate drive signals for alternating operation. The control circuitry 14 may be implemented using analog or digital control logic, microcontrollers, gate driver ICs, or a combination thereof. The specific arrangement and signal pathways are omitted for clarity and may vary depending on implementation, but would be understood by a person skilled in the art. The invention is not limited to any particular control circuit layout.

The control circuitry 14 is configured to operate the switches 11a and 11b alternately, each with an adjustable deadtime between transitions. In other words, the control circuit 14 alternately turns the high-side and low-side switches on and off with an adjustable deadtime between transitions. The control circuitry 14 is further configured to determine a trigger condition based on the oscillation behavior of the voltage at the midpoint node 11c, and to initiate switching of one of the switches in response to this condition.

Notably, the trigger condition corresponds to a peak or valley of the oscillating voltage at the midpoint node 11c.

In one embodiment, the control circuitry 14 is configured to monitor the oscillation behavior of the voltage at the midpoint node 11c. In another embodiment, the control circuitry 14 is configured to predict the oscillation behavior of the voltage at the midpoint node 11c, e.g., by pre-calculating the expected oscillation behavior using known component parameters of the switching circuit.

In other words, the control strategy may include real-time monitoring of the midpoint voltage using voltage sensing circuitry and/or pre-calculated timing based on a resonant model of the circuit. In some implementations, a comparator circuit may be used to detect when the voltage crosses a predefined threshold, indicating a peak or valley.

That is, the control circuitry 14 may include a comparator configured to detect when the midpoint voltage crosses a predefined threshold, thereby enabling efficient and hardware-friendly detection of peaks or valleys without complex signal processing. This implementation supports fast response and cost-effective realization of the switching strategy.

In one embodiment, switching is initiated within a predefined timing window associated with a detected peak or valley, i.e., a relatively narrow timing interval centered on the detected peak or valley. This allows the system to tolerate timing variations caused by noise, signal delay, or comparator thresholds while still ensuring the switching event occurs close to an optimal voltage point. The result is robust and consistent soft-switching performance even in real-world conditions.

In one embodiment, the transformer 13 may preferably be implemented as a matrix transformer. The transformer 13 may comprise a plurality of secondary windings 13b connected in parallel. These secondary windings 13b are configured to supply a rectified output voltage Vout at high current and low voltage. For instance, each secondary winding 13b may be connected to an individual secondary-side rectifier circuit 15, which provides a regulated output voltage at high current and low voltage.

For instance, in GPU power systems, "low DC voltage and high current" may mean supply voltages in about 1-2 V range, with currents from 50 A up to 600 A+, depending on load and system design.

The transformer 13 may comprise at least one primary winding 13a. The primary winding 13a of the transformer 13 could be formed by a single winding or multiple winding elements, which are connected in series. The at least one primary winding 13a can be magnetically coupled to the plurality of secondary windings 13b, i.e., to each of the plurality of secondary windings.

In preferred embodiments, the transformer 13 is designed with a winding ratio between the primary and secondary windings that is substantially one-to-one, thereby enabling efficient high-current transfer. However, also other winding ratios between primary and secondary windings are possible.

In one embodiment, the plurality of secondary windings Ls can be connected in parallel, wherein each secondary winding 13b is connected to a synchronous rectifier SR, which can comprise a switch with a diode D and a capacitor CDS connected in parallel. The converter can further comprise a number of output capacitors, Cout, which can smooth an output voltage before forwarding it to a load R_load.

The electrical power converter 10 can be used for power delivery to a CPU, a GPU, or another component with a high power demand, e.g., in a datacenter environment.

It may be understood that Fig. 1 also shows a power delivery system 1 comprising a load device 20 configured to operate at a low DC voltage and high current, and the electrical power converter 10.

In various embodiments, the load device 10 may include, but is not limited to, a GPU in a server or data center, an industrial computing module, or a lighting system such as an LED array, luminaire, or ballast.

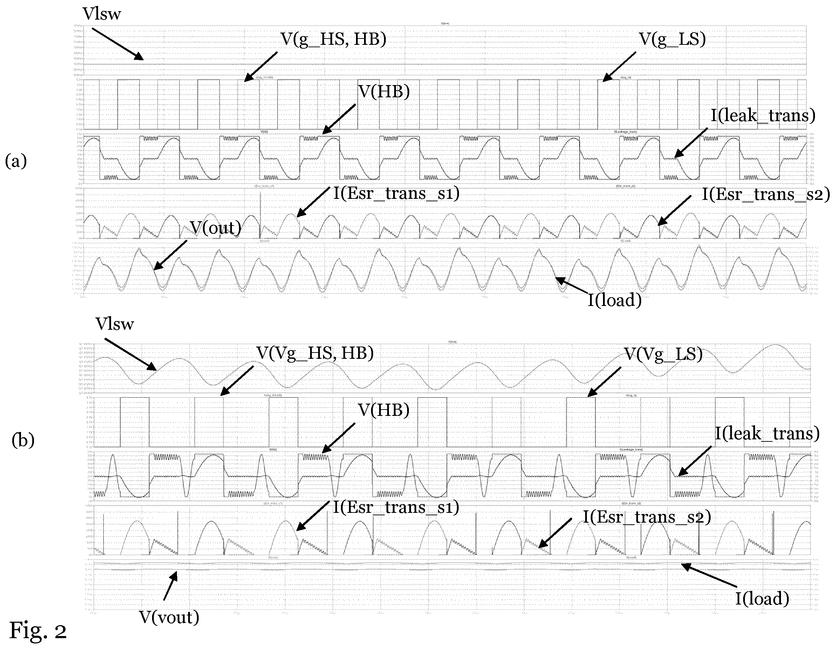

Fig. 2 illustrates representative timing diagrams for the operation of the electrical power converter (10) shown in Fig. 1, under two different switching control strategies:
(a) Conventional ZVS, and
(b) Delayed switching based on oscillation behavior at the midpoint node, referred to as "close to ZVS" operation.

These timing diagrams demonstrate the interaction between the control signals, midpoint voltage, and resonant current waveforms during one or more switching cycles.

In Fig. 2(a), the converter operates using conventional ZVS control, where the deadtime between switching transitions is relatively short and switching events occur when the midpoint voltage passes through zero.

Key waveforms shown include:
V(g_HS) and V(g_LS): Gate drive signals for the high-side switch 11a and low-side switch 11b, respectively. These are alternated with a fixed on-time and a brief deadtime.

V(HB): Voltage at the midpoint node 11c. Under ZVS, this waveform transitions cleanly from high to low (or vice versa) during the deadtime, with minimal oscillation.

I(leak_trans): Current through the transformer leakage inductance, showing smooth resonant transitions.

I(load) and V(out): Output current and voltage, indicating steady power delivery.

This waveform corresponds to a situation in which the control circuitry 14 in Fig. 1 detects or assumes that ZVS conditions are met based on circuit parameters. The switching is not dependent on peak/valley detection, and the midpoint voltage does not significantly oscillate before switching.

This mode is efficient at moderate to high loads but becomes suboptimal at light load, where short deadtimes reduce control resolution and switching loss may increase if the midpoint voltage does not cross zero naturally.

In Fig. 2(b), the converter 10 operates under the oscillation-aware switching strategy as proposed in the invention. Here, the deadtime is extended, and the switching event is delayed until a subsequent peak or valley in the oscillating midpoint voltage is detected.

Key waveforms shown include:
V(g_HS) and V(g_LS): Gate drive signals show intentionally longer deadtimes between transitions.

V(HB): After one of the switches turns off, the midpoint voltage collapses and begins to oscillate due to the tank and parasitic elements (e.g., transformer leakage inductance and stray capacitance). Instead of switching at the first zero crossing, the controller waits for the first, second, or third oscillation peak/valley, depending on timing and load conditions.

I(leak_trans): Resonant current shows reduced amplitude, consistent with light-load operation.

I(load) and V(out): Output remains regulated, with reduced per-cycle power.

This operation mode is directly enabled by the control circuitry 14 as proposed in Fig. 1, which:
- Determines the start of the oscillation phase after a voltage collapse.
- Identifies a peak or valley using a comparator, monitoring circuit, or model-based timing.
- Triggers the next switching event (either turning on the high-side switch 11a or the low-side switch 11b) at a waveform extremum within a timing window, thereby achieving near-ZVS switching.

This mode is particularly advantageous under light-load or idle conditions, where longer deadtimes reduce switching frequency and power delivery. By timing the switch-on event to align with a natural oscillation, switching losses are minimized even when standard ZVS cannot be achieved.

Fig. 2 demonstrates the core technical innovation described in the present invention: delaying switch-on timing to coincide with a natural peak or valley in the oscillating midpoint voltage after collapse, allowing the converter to extend its efficient operating range, especially under light-load conditions. This behavior is enabled by the architecture shown in Fig. 1, and specifically by the capabilities of the control circuitry 14 as defined in the previous embodiments.

It may be understood that the power converter 10 may operate in a first switching mode with conventional ZVS when the output power exceeds a predetermined threshold; and operate in a second switching mode in which switching is initiated at a peak or valley of an oscillating midpoint voltage after a collapsed state, when the output power is below the predetermined threshold.

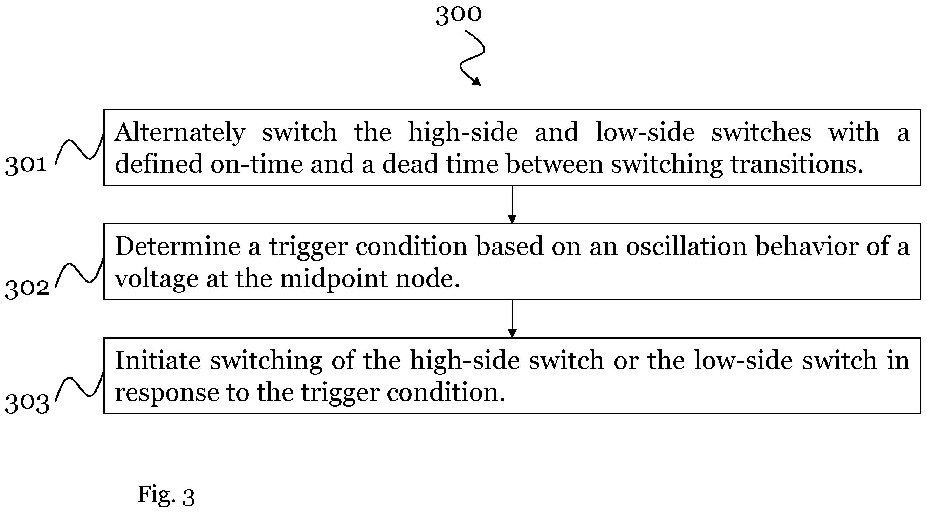

Fig. 3 illustrates a flowchart representing an embodiment of the method 300 for operating the electrical power converter 10 according to the invention. The electrical power converter 10 may be the electrical power converter described in the previous embodiments, as shown in Fig. 1, and operated in accordance with the control strategies illustrated in Fig. 2.

The method enables efficient switching of a resonant converter, particularly under light-load conditions, by dynamically timing switching events based on the oscillation behavior of the midpoint voltage. This method supports both ZVS and near-ZVS operation through extended deadtime and waveform analysis.

The method comprises a step 301 of alternately switching the high-side and low-side switches with an adjustable deadtime between switching transitions.

In this initial step, the control circuitry 14 alternately activates the high-side switch 11a and the low-side switch 11b of the half-bridge primary switching circuit 11. The switching is carried out with an adjustable deadtime inserted between the turn-off of one switch and the turn-on of the other.

Possibly, the deadtime may be: fixed during normal ZVS operation, or dynamically extended based on system operating conditions such as reduced load, low switching frequency, or observed collapse of the midpoint voltage.

This step sets up the condition under which the midpoint node 11c begins to oscillate due to resonant interactions in the circuit, as seen in Fig. 2(b).

The method further comprises a step 302 of determining a trigger condition based on an oscillation behavior of a voltage at the midpoint node 11c.

Following the turn-off of one of the switches and during the deadtime, the method proceeds to detect the oscillation behavior of the voltage at the midpoint node 11c.

This step may involve: monitoring the midpoint voltage using analog sensing or a voltage comparator, or pre-calculating the expected timing of a peak or valley based on the resonant characteristics of the tank circuit and known parasitic elements.

The control circuitry 14 identifies a trigger condition, such as: a peak (maximum voltage point) or valley (minimum voltage point) in the oscillating voltage waveform, or the voltage crossing a predefined threshold that corresponds to an expected extremum.

The oscillation behavior may occur after a collapse of the midpoint voltage, especially when extended deadtime is used - as illustrated in Fig. 2(b).

The method further comprises a step 303 of initiating switching of the high-side switch 11a or the low-side switch 11b in response to the trigger condition.

Once the trigger condition is met, the method proceeds to initiate the switching of the appropriate switch - either the high-side 11a or low-side 11b - depending on the switching sequence.

In some embodiments: the high-side switch 11a is turned on at a detected or predicted peak, and the low-side switch 11b is turned on at a detected or predicted valley of the midpoint voltage waveform.

This precise or near-precise alignment of the switch-on moment with the natural oscillation of the node voltage allows the converter to:
- Minimize switching losses by operating under soft-switching or near-zero-voltage conditions,
- Reduce EMI, and
- Improve efficiency, particularly under conditions where conventional ZVS timing cannot be maintained.

The method may returns to step 301 and continues alternating the switching sequence with updated timing and oscillation-based decision-making, enabling adaptive operation across varying load conditions.

By integrating oscillation-aware control logic into each switching cycle, the converter dynamically adjusts to its resonant behavior. The method achieves extended soft-switching operation, lowers energy loss, and enhances control flexibility - particularly under light-load or standby conditions.

The foregoing description has presented exemplary embodiments of an electrical power converter and its method of operation, particularly suited for high-current, low-voltage applications such as GPU power delivery in data centers, where typical output voltages range from 1 V to 2 V with substantial current demands. Central to the invention is the use of an oscillation-aware control technique that times switching events based on the natural oscillation behavior of the midpoint voltage following a switching transition. By initiating switching at a detected or predicted peak or valley of this oscillation-especially after the midpoint voltage has collapsed due to an extended deadtime-the converter can maintain near-zero-voltage switching (ZVS) conditions. This approach enables efficient operation under low output power conditions, reduces switching losses, and enhances the converter's performance across a wide load range.

Although the invention has been described with reference to specific components such as an LLC resonant topology, matrix transformer configurations, and particular timing control schemes, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

For example, the control strategy may be implemented through different sensing or predictive methods, and the converter may be adapted for other applications, including LED lighting, telecommunications, or industrial systems. The transformer configuration, winding ratios, and rectification topologies may also be varied to meet different system requirements.

In addition, while a particular feature of the invention may have been disclosed with respect to only one of several implementations, such feature may be combined with one or more other features of the other implementations as may be desired and advantageous for any given or particular application.

## Claims

1. An electrical power converter (10) comprising:
a primary-side switching circuit (11) including a high-side switch (11a) and a low-side switch (11b) connected in series between a supply voltage and ground, wherein a midpoint node (11c) is defined at the connection between the high-side (11a) and low-side switches (11b);
a resonant tank circuit (12) coupled to the midpoint node (11c) and a transformer (13),
the transformer (13) having a primary winding (13a) coupled to the resonant tank circuit (12) and one or more secondary windings (13b), and
a control circuitry (14) configured to:
- alternately control the high-side switch (11a) and the low-side switch (11b) with an adjustable deadtime between switching transitions;
- determine a trigger condition based on an oscillation behavior of a voltage at the midpoint node (11c); and
- initiate switching of the high-side switch (11a) or the low-side switch (11b) in response to the trigger condition.

2. The electrical power converter (10) according to claim 1, wherein the trigger condition corresponds to a peak or a valley of an oscillating voltage at the midpoint node (11c).

3. The electrical power converter (10) according to claim 2, wherein the control circuitry (14) is further configured to:
determine a peak or a valley of the oscillating voltage by
- monitoring the voltage at the midpoint node (11c), and/or
- pre-calculating the voltage based on one or more component parameters of the primary-side switching circuit (11).

4. The electrical power converter (10) according to claim 3, wherein the control circuitry (14) further comprises a comparator circuit configured to detect when the voltage at the midpoint node (11c) crosses a predefined threshold, to determine a peak or a valley of the oscillating voltage.

5. The electrical power converter (10) according to claims 3 or 4, wherein the control circuitry (14) is configured to:
initiate switching of the high-side switch (11a) or the low-side switch (11b) within a predefined timing window corresponding to a determined peak or valley of the oscillating voltage.

6. The electrical power converter (10) according to claim 5, wherein the control circuitry (14) is configured to:
switch on the high-side switch (11a) when the monitored or pre-calculated voltage at the midpoint node (11c) reaches a predefined peak value; or
switch on the low-side switch (11b) when the monitored or pre-calculated voltage at the midpoint node (11c) reaches a predefined valley value.

7. The electrical power converter (10) according to any one of the preceding claims, wherein the control circuitry (14) is configured to initiate switching of the high-side switch (11a) or the low-side switch (11b) at a peak or a valley of the oscillating voltage at the midpoint node (11c) that occurs after the midpoint voltage has collapsed from a previous switching transition.

8. The electrical power converter (10) according to any one of the preceding claims, wherein the adjustable deadtime is configured to extend a duration corresponding to zero-voltage switching ZVS.

9. The electrical power converter (10) according to any one of the preceding claims, wherein the transformer (13) is a matrix transformer comprising a plurality of secondary windings (13b) connected in parallel, each configured to deliver a portion of a total output current.

10. The electrical power converter (10) according to any one of the preceding claims, further comprising:
one or more secondary-side rectification circuits (15), each being connected to a respective secondary winding (13b) and outputting an output voltage.

11. The electrical power converter (10) according to any one of the preceding claims, wherein the transformer (13) is configured such that a winding ratio between the primary and each secondary winding is substantially equal.

12. A method (300) for operating an electrical power converter (10) comprising a high-side switch, a low-side switch, a resonant circuit, and a transformer, the method comprising:
- alternately switching (301) the high-side switch (11a) and the low-side switch (11b) with an adjustable deadtime between switching transitions;
- determining (302) a trigger condition based on an oscillation behavior of a voltage at the midpoint node (11c); and
- initiating (303) switching of the high-side switch (11a) or the low-side switch (11b) in response to the trigger condition.

13. A power delivery system (1) comprising:
a load device (20) configured to operate at a low DC voltage and high current; and
an electrical power converter (10) according to any one of claims 1 to 11, wherein the electrical power converter (10) is configured to supply power to the load device (20).

14. The power delivery system (1) according to claim 13, wherein the load device (20) comprises a graphics processing unit, a lighting module, or an array of LEDs.
